# EUROPEAN PATENT SPECIFICATION

(11) **EP 2 804 415 B1**
(45) Date of publication and mention of the grant of the patent: **25.09.2019**
(21) Application number: 13764624.6
(22) Date of filing: 19.03.2013
(51) Int. Cl.: H04W 24/00

(54) **METHOD AND DEVICE UTILIZING MOBILE TERMINAL TO REMIND USER BASED ON SET POSITION**
VERFAHREN UND VORRICHTUNG ZUR VERWENDUNG EINES MOBILEN ENDGERÄTS ZUR ERINNERUNG EINES BENUTZERS AUF DER BASIS EINER EINGESTELLTEN POSITION
PROCÉDÉ ET DISPOSITIF UTILISANT UN TERMINAL MOBILE POUR RAPPELER QUELQUE CHOSE À UN UTILISATEUR SUR LA BASE D'UNE POSITION RÉGLÉE

(30) Priority: 19.03.2012 CN 201210072800
(43) Date of publication of application: 19.11.2014
(73) Proprietor: VID SCALE, Inc., Wilmington, DE 19809 (US)
(72) Inventor: CHEN, Wei, Shenzhen Guangdong 518129 (CN)
(74) Representative: AWA Sweden AB
(86) International application number: PCT/CN2013/072863
(87) International publication number: WO 2013/139252

(56) References cited:
- CN-A- 1 728 601
- CN-A- 102 202 325
- CN-A- 102 595 322
- US-A1- 2004 176 107
- US-A1- 2010 127 919
- US-A1- 2010 279 710

## Description

### TECHNICAL FIELD

The present invention relates to the field of communications technologies, and in particular, to a method and an apparatus for reminding a user based on a set position by using a mobile terminal.

### BACKGROUND

A WLAN (wireless local area networks, wireless local area network) is a very convenient data transmission system. By utilizing an RF (radio frequency, radio frequency) technology to take the place of a local area network formed by an old-fashioned troublesome twisted pair copper wire, the wireless local area network can achieve, by using a simple access architecture, an ideal state where information is readily accessible to people traveling around the world.

At present, in addition to data communication using the WLAN, a WLAN-based positioning function is also developed, where positioning can be implemented by using the WLAN.

In the prior art, an apparatus for reminding a user of an article left behind includes: a transmitter disposed on an article, a receiver, and a triggering switch disposed on a door, and a reminder, where an on or off state of the triggering switch is controlled by opening or closing of the door, the reminder is electrically connected to both the receiver and the triggering switch, and a working state of the reminder is controlled by an output state of the receiver and an on or off state of the triggering switch. When a user leaves with the article, the receiver receives a signal from the transmitter, and the reminder does not work. When the user leaves without the article, the receiver does not receive a signal from the transmitter, and the triggering switch triggers the reminder to send a reminding signal.

The foregoing apparatus in the prior art for reminding a user of an article left behind has the following disadvantages: A receiver needs to be installed on a door, and a user needs to carry a transmitter, which is troublesome for the user and is relatively costly.

US 2010/127919 A1 provides a method for increasing the probability of detection of movement into or out of a geographically defined area while decreasing the probability of false positives. A method and system are disclosed for locating wireless devices and determining whether a device has entered or exited a pre-provisioned 2-dimensional or 3-D dimensional geographic zone and alerting the mobile device user or a network monitor when the mobile device has entered or exited the zone. In an embodiment, the locator system may include a wireless device attached to an object that is to be located. The device may further include a GPS receiver and an internal antenna subsystem, a wireless data transceiver and an internal antenna subsystem, and application software using a false alarm minimization algorithm.

US 2010/279710 A1 provides a method for location notification using location context information. At step 4-1, the apparatus determines a location of a mobile device. At step 4-2, based on the location of the mobile device, the apparatus automatically determines a point of interest in a vicinity of the mobile device. At step 4-3, the apparatus determines whether there is movement towards the point of interest. If there is movement towards the point of interest, then at step 4-4, the apparatus generates location context information to indicate arrival at the point of interest. However, if there is no movement towards the point of interest and instead the apparatus determines at step 4-5 that there is movement away from the point of interest, then at step 4-6 the apparatus generates location context information to indicate departure from the point of interest. If there is no movement towards or away from the point of interest, then at step 4-7 the apparatus generates location context information to indicate being in vicinity of the point of interest.

US 2004/0176107 A1 provides a method for providing a wireless device with advanced location-based task/reminder functionality. A system for causing a wireless device to provide a location-based task functionality is described, the system comprising: a server for remotely exchanging data information with the wireless device; a position detector logically coupled with the server, the position detector determining a position of a remote wireless device; wherein the server generates an event trigger signal and sends the event trigger signal to the wireless device if a predefined condition based on the position is met, wherein a user of the wireless device configures the predefined condition on the server.

US 2010/317371 provides a cell phone that automatically determines appropriate user interface (UI) settings to implement at different times and/or locations. While at the coffee shop, just before leaving, or just after leaving the coffee shop, the user may set the ringer back on and the vibrate notification off. The mobile device can automatically sense when it is at the coffee shop, such as based on an SSID of the Wi-Fi network, and set the ringer off, without requiring any manual intervention by the user. The mobile device can optionally inform the user that an automatic setting has been implemented. Similarly, the mobile device can automatically sense when it is no longer at the coffee shop, and automatically set the ringer back on or revert to some other UI setting or profile.

WO 2004/043100 provides a device and method for generating an alert signal based on the geographical position of the device, optionally also based on time or date. Positioning means for updating and storing an actual position of the device; location storage means for storing the location of a place of interest; means for storing a request for an alert signal associated with the location of a place of interest; and trigger means for comparing the actual position of the device with the location of a place of interest and triggering generation of said alert signal when the distance between the actual position of the device and the location of a place of interest is less than a predetermined value.

### SUMMARY

Embodiments of the present invention provide a method and an apparatus for reminding a user based on a set position by using a mobile terminal, so as to remind a user effectively.

A method for reminding a user based on a set position by using a mobile terminal includes:
detecting, by a mobile terminal of a user by using a wireless network, that a distance between the mobile terminal and a set position is greater than a set value; and
in response to the detection, reminding, by the mobile terminal, the user of a set event according to a set reminding manner,
wherein the detecting, by a mobile terminal of a user by using a wireless network, that a distance between the mobile terminal and a set position is greater than a set value comprises:
   after the mobile terminal of the user detects by using a wireless local area network that the mobile terminal is disconnected from a wireless router at the set position, determining that the distance between the mobile terminal and the set position is greater than the set value.

A mobile terminal includes:
a position detecting module, configured to detect by using a wireless network that a distance between the mobile terminal and a set position is greater than a set value; and
a reminding processing module, configured to remind a user of the mobile terminal of a set event according to a set reminding manner in response to the detection, wherein:
   the position detecting module is further configured to: after it is detected by using a wireless local area network that the mobile terminal is disconnected from a wireless router at the set position, determine that the distance between the mobile terminal and the set position is greater than the set value.

As can be seen from the foregoing technical solutions provided by the embodiments of the present invention, the embodiments of the present invention can make full use of a WLAN function or a wireless communication function of a mobile terminal to determine, without any additional hardware, a position of a user by using a WLAN or a positioning system, thereby implementing a function of reminding the user.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a flowchart of specific processing of a method for reminding a user based on a set position by using a mobile terminal according to Embodiment 1 of the present invention; and
FIG. 2 is a structural diagram of an apparatus for reminding a user based on a set position by using a mobile terminal according to Embodiment 2 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the embodiments to be described are a part rather than all of the embodiments of the present invention. All other embodiments obtained by a person of ordinary skill in the art based on the embodiments of the present invention without creative efforts shall fall within the protection scope of the present invention.

To facilitate the understanding of the embodiments of the present invention, further description is made by using several specific embodiments as examples with reference to the accompanying drawings, and each embodiment does not limit the embodiments of the present invention.

### Embodiment 1

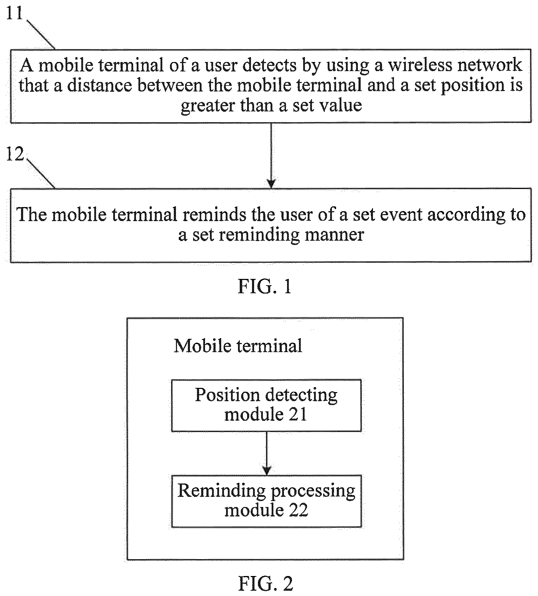

This embodiment provides a method for reminding a user based on a set position by using a mobile terminal. A specific processing procedure of this method is shown in FIG. 1, including the following processing steps:
Step 11: A mobile terminal of a user detects by using a wireless network that a distance between the mobile terminal and a set position is greater than a set value.

A wireless router is installed at the set position, where the set position may be a home address or an office address of the user. The mobile terminal may be a mobile phone of the user.

When the mobile terminal of the user is near the set position, the mobile terminal of the user may connect to the wireless router at the set position by using a WLAN. When the mobile terminal of the user detects by using the WLAN that the mobile terminal is disconnected from the wireless router at the set position, it is determined that the distance between the mobile terminal and the set position is greater than the set value.

Or,
the mobile terminal of the user connects to a positioning system by using a wireless communication network, acquires a geographical position of the mobile terminal from the positioning system, and when a distance between the geographical position of the mobile terminal and a geographical position of the set position is greater than a set distance, determines that the distance between the mobile terminal and the set position is greater than the set value.

The positioning system includes: the GPS (global positioning system, global positioning system) or the BeiDou Navigation Satellite System or a base station of the mobile terminal.

Step 12: The mobile terminal reminds the user of a set event according to a set reminding manner.

The mobile terminal rings or vibrates, and reminds the user of the set event on a display screen of the mobile terminal, for example, reminds the user to bring some articles.

As can be seen from the foregoing technical solution provided by the embodiment of the present invention, the embodiment of the present invention can make full use of a WLAN function or a wireless communication function of a mobile terminal to determine, without any additional hardware, a position of a user by using a WLAN or a positioning system, thereby implementing a function of reminding the user.

### Embodiment 2

This embodiment provides a mobile terminal. A specific structure of the mobile terminal is shown in FIG. 2 and includes the following modules:
a position detecting module 21, configured to detect by using a wireless network that a distance between the mobile terminal and a set position is greater than a set value; and
a reminding processing module 22, configured to remind a user of the mobile terminal of a set event according to a set reminding manner.

Specifically, the position detecting module 21 is further configured to: after it is detected by using a wireless local area network that the mobile terminal is disconnected from a wireless router at the set position, determine that the distance between the mobile terminal and the set position is greater than the set value.

Specifically, the position detecting module 21 is further configured to connect to a positioning system by using a wireless communication network, acquire a geographical position of the mobile terminal from the positioning system, and when a distance between the geographical position of the mobile terminal and a geographical position of the set position is greater than a set distance, determine that the distance between the mobile terminal and the set position is greater than the set value.

Specifically, the positioning system includes: the GPS or the BeiDou Navigation Satellite System or a base station of the mobile terminal.

Specifically, the reminding processing module 22 is further configured to perform a ringing or vibrating operation, and remind the user of the set event on a display screen of the mobile terminal.

A specific process of reminding a user based on a set position by using the apparatus of the embodiment of the present invention is similar to the foregoing method embodiment, which is not described repeatedly herein.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), a random access memory (Random Access Memory, RAM), or the like.

To sum up, the embodiments of the present invention can make full use of a WLAN function or a wireless communication function of a mobile terminal to determine, without any additional hardware, a position of a user by using a WLAN or a positioning system, thereby implementing a function of reminding the user.

The foregoing descriptions are merely exemplary and specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for reminding a user based on a set position by using a mobile terminal, comprising:
detecting (step 11), by a mobile terminal of a user by using a wireless network, that a distance between the mobile terminal and a set position is greater than a set value; and
in response to the detection, reminding (step 12), by the mobile terminal, the user of a set event according to a set reminding manner,
wherein the detecting, by a mobile terminal of a user by using a wireless network, that a distance between the mobile terminal and a set position is greater than a set value comprises:
after the mobile terminal of the user detects by using a wireless local area network that the mobile terminal is disconnected from a wireless router at the set position, determining that the distance between the mobile terminal and the set position is greater than the set value.

2. The method according to claim 1, wherein the reminding, by the mobile terminal, the user of a set event according to a set reminding manner comprises:
ringing or vibrating, by the mobile terminal, and reminding the user of the set event on a display screen of the mobile terminal.

3. A mobile terminal, comprising:
a position detecting module (21), configured to detect by using a wireless network that a distance between the mobile terminal and a set position is greater than a set value; and
a reminding processing module (22), configured to remind a user of the mobile terminal of a set event according to a set reminding manner in response to the detection,
wherein:
the position detecting module (21) is further configured to: after it is detected by using a wireless local area network that the mobile terminal is disconnected from a wireless router at the set position, determine that the distance between the mobile terminal and the set position is greater than the set value.

4. The mobile terminal according to claim 3, wherein:
the reminding processing module (22) is further configured to perform a ringing or vibrating operation, and remind the user of the set event on a display screen of the mobile terminal.

## Patentansprüche

1. Verfahren zur Erinnerung eines Benutzers basierend auf einer eingestellten Position durch Verwendung eines mobilen Endgeräts, umfassend:
Erkennung (Schritt 11), durch ein mobiles Endgerät eines Benutzers durch Verwendung eines Drahtlosnetzwerks, dass eine Distanz zwischen dem mobilen Endgerät und einer eingestellten Position größer als ein eingestellter Wert ist; und
in Reaktion auf die Erkennung, Erinnerung (Schritt 12) des Benutzers durch das mobile Endgerät an ein eingestelltes Ereignis nach einer eingestellten Erinnerungsweise,
wobei die Erkennung, dass eine Distanz zwischen dem mobilen Endgerät und einer eingestellten Position größer als ein eingestellter Wert ist, durch ein mobiles Endgerät eines Benutzers durch Verwendung eines Drahtlosnetzwerks umfasst:
nachdem das mobile Endgerät des Benutzers unter Verwendung eines drahtlosen Ortsnetzwerks erkennt, dass das mobile Endgerät von einem Drahtlosrouter an der eingestellten Position getrennt ist, Erkennung, dass die Distanz zwischen dem mobilen Endgerät und der eingestellten Position größer als der eingestellte Wert ist.

2. Verfahren nach Anspruch 1, wobei die Erinnerung durch das mobile Endgerät für den Benutzer an ein eingestelltes Ereignis einer eingestellten Benachrichtigungsweise entsprechend umfasst:
Klingeln oder Vibrieren durch das mobile Endgerät, und Erinnerung des Benutzers an das eingestellte Ereignis auf einem Anzeigebildschirm des mobilen Endgeräts.

3. Mobiles Endgerät, umfassend:
ein Positionserkennungsmodul (21), konfiguriert zur Erkennung durch Verwendung eines Drahtlosnetzwerks, dass eine Distanz zwischen dem mobilen Endgerät und einer eingestellten Position größer als ein eingestellter Wert ist; und
ein Erinnerungsverarbeitungsmodul (22), konfiguriert, einen Benutzer des mobilen Endgeräts in Reaktion auf die Erkennung nach einer eingestellten Erinnerungsweise an ein eingestelltes Ereignis zu erinnern,
wobei:
das Positionserkennungsmodul (21) ferner konfiguriert ist, nach Erkennung durch Verwendung eines drahtlosen Ortsnetzwerks, dass das mobile Endgerät von einem Drahtlosrouter an der eingestellten Position getrennt ist, zu bestimmen, dass die Distanz zwischen dem mobilen Endgerät und der eingestellten Position größer als der eingestellte Wert ist.

4. Mobiles Endgerät nach Anspruch 3, wobei:
das Erinnerungsverarbeitungsmodul (22) ferner konfiguriert ist, eine Klingel- oder Vibrationsfunktion durchzuführen und den Benutzer an das eingestellte Ereignis auf einem Anzeigebildschirm des mobilen Endgeräts zu erinnern.

## Revendications

1. Procédé de rappel à un utilisateur sur la base d'une position réglée en utilisant un terminal mobile, comprenant de :
détecter (étape 11), par un terminal mobile d'un utilisateur en utilisant un réseau sans fil, qu'une distance entre le terminal mobile et une position réglée est supérieure à une valeur réglée ; et
en réponse à la détection, rappeler (étape 12), par le terminal mobile, à l'utilisateur un événement réglé selon une manière de rappel réglée,
dans lequel la détection, par un terminal mobile d'un utilisateur en utilisant un réseau sans fil, qu'une distance entre le terminal mobile et une position réglée est supérieure à une valeur réglée comprend de :
après que le terminal mobile de l'utilisateur détecte en utilisant un réseau local sans fil que le terminal mobile est déconnecté d'un routeur sans fil à la position réglée, déterminer que la distance entre le terminal mobile et la position réglée est supérieure à la valeur réglée.

2. Procédé selon la revendication 1 dans lequel le rappel, par le terminal mobile, à l'utilisateur d'un événement réglé selon une manière de rappel réglée comprend de :
sonner ou vibrer, par le terminal mobile, et rappeler à l'utilisateur l'événement réglé sur un écran d'affichage du terminal mobile.

3. Terminal mobile, comprenant :
un module de détection de position (21), configuré pour détecter en utilisant un réseau sans fil qu'une distance entre le terminal mobile et une position réglée est supérieure à une valeur réglée ; et
un module de traitement de rappel (22), configuré pour appeler à un utilisateur du terminal mobile un événement réglé selon une manière de rappel réglée en réponse à la détection,
dans lequel :
le module de détection de position (21) est en outre configuré pour : après qu'il est détecté en utilisant un réseau local sans fil que le terminal mobile est déconnecté d'un routeur sans fil à la position réglée, déterminer que la distance entre le terminal mobile et la position réglée est supérieure à la valeur réglée.

4. Terminal mobile selon la revendication 3, dans lequel :
le module de traitement de rappel (22) est en outre configuré pour effectuer une opération de sonnerie ou de vibration et rappeler à l'utilisateur l'événement réglé sur un écran d'affichage du terminal mobile.
